# EUROPÄISCHE PATENTSCHRIFT

(11) **EP 1 325 861 B1**
(45) Veröffentlichungstag und Bekanntmachung des Hinweises auf die Patenterteilung: **28.06.2006**
(21) Anmeldenummer: 02027504.6
(22) Anmeldetag: 05.12.2002
(51) Int. Cl.: B62D 55/084

(54) **Raupenfahrwerk**
Tracklaying undercarriage
Train de roulement à chenilles

(30) Priorität: 04.01.2002 DE 10200175
(43) Veröffentlichungstag der Anmeldung: 09.07.2003
(73) Patentinhaber: BAUER Maschinen GmbH, 86529 Schrobenhausen (DE)
(72) Erfinder: Harthauser, Werner, Dipl.-Ing.(FH), 86637 Wertingen (DE)
(74) Vertreter: Wunderlich, Rainer

(56) Entgegenhaltungen:
- EP-A- 0 803 428
- SU-A- 1 698 120
- US-A- 3 820 616
- PATENT ABSTRACTS OF JAPAN vol. 009, no. 242 (M-417), 28. September 1985 (1985-09-28) & JP 60 094877 A (KOBE SEIKOSHO KK), 28. Mai 1985 (1985-05-28)

## Beschreibung

Die Erfindung betrifft ein Raupenfahrwerk, insbesondere für eine Baumaschine, gemäß dem Oberbegriff des Anspruchs 1 sowie ein Verfahren zur Montage der selben.

Ein solches Raupenfahrwerk ist insbesondere ausgebildet mit einem Mittelteil und zwei Raupenträgern mit je einer Raupenkette, wobei die Raupenträger entlagen einer Längsrichtung zu beiden Längsseiten des Mittelteils angeordnet sind und an Querträgern lösbar befestigt sind, welche an dem Mittelteil in einer Querrichtung verschiebbar gelagert sind, wobei die Querträger jeweils an ihrem zum Raupenträger gerichteten Ende einen sich zumindest bereichsweise verjüngenden Aufnahmezapfen zum Einfahren in Aufnahmelöcher an den Raupenträgern aufweisen.

Derartige Raupenfahrwerke kommen vor allem bei Baumaschinen, beispielsweise Baggern, Greifern, Kränen, Planierraupen etc., wegen der guten Geländegängigkeit zum Einsatz. Dabei ist es bekannt, zur Verstellung der Spurbreite die beiden Raupenträger an den Längsseiten eines Mittelteiles zu verschieben. So kann im Betrieb eine möglichst große Spurbreite eingestellt werden, was die Standfestigkeit der Baumaschine erhöht. Eine Verringerung der Spurbreite ist hingegen für einen Transport der Baumaschine von und zur Baustelle zweckmäßig. Zur Erhöhung der Transportfähigkeit ist es weiterhin bekannt, die Raupenträger insgesamt von dem Raupenfahrwerk abzunehmen. Die Raupenträger können somit separat von dem Mittelteil transportiert werden, was sowohl die Dimensionen als auch das Gewicht der zu transportierenden Einzelteile verringert.

Ein gattungsgemäßes Raupenfahrwerk ist beispielsweise aus der US-PS 5,598,896 bekannt. Bei diesem bekannten Raupenfahrwerk werden die Raupenträger jeweils an zwei verschiebbaren Querträgern über Lochplatten und einer Vielzahl von Schraubbolzen lösbar befestigt.

Ein derartiges Befestigen der Raupenträger an den Querträgern kann jedoch unter Baustellenbedingungen sehr schwierig sein. Denn die mehrere Meter langen und mehrere Tonnen schweren Raupenträger müssen auf der Baustelle millimetergenau zu den Querträgern justiert werden, so dass die Löcher in den Lochplatten mit den Schraubohrungen fluchten. Eine derartige exakte Justierung ist zeit- und arbeitsaufwändig. Weiterhin bedarf es eines speziellen Hebezeuges, um die tonnenschweren Raupenträger mit der notwendigen Genauigkeit an den Querträgern zu justieren.

Ein gattungsgemäßes Raupenfahrwerk ist aus der EP 0 803 428 A1 bekannt. Die verschiebbaren Querträger haben über ihre gesamte Länge einen eckigen Querschnitt und weisen an der Oberseite ihrer freien Enden eine Abschrägung auf. Zur Montage der Raupenträger ist aber weiter eine möglichst genaue Ausrichtung zu den Querträgern notwendig. Zudem ist das Fertigen einer exakten Abschrägung problematisch.

Ein weiteres Raupenfahrwerk geht aus der US 3,820,616 hervor. Bei diesem Raupenfahrwerk sind die Raupenketten an Achselementen mit zylindrischer Außenoberfläche lösbar befestigt.

Die JP 60-094877 offenbart ein weiteres Raupenfahrwerk mit Achsstrukturen mit rechteckigem Querschnitt.

Aus der SU 1698120 Al geht ein Raupenfahrwerk hervor, bei dem zum Einstellen der Spurweite Verlängerungsteile in die Querträger einbringbar sind.

Der Erfindung liegt die **Aufgabe** zugrunde, ein Raupenfahrwerk anzugeben, bei dem abnehmbare Raupenträger einfach und dennoch genau selbst unter Baustellenbedingungen an die Querträger montiert werden können.

Die Aufgabe wird erfindungsgemäß durch ein Raupenfahrwerk mit den Merkmalen des Anspruchs 1 gelöst. Bevorzugte Ausführungsformen der Erfindung sind in den abhängigen Ansprüchen angegeben.

Bei dem Raupenfahrwerk ist vorgesehen, dass die Querträger jeweils an ihrem zum Raupenträger gerichteten Ende einen sich zumindest bereichsweise konisch verjüngenden Aufnahmezapfen aufweisen und dass an den Raupenträgern Aufnahmelöcher vorgesehen sind, welche korrespondierend zu den Aufnahmezapfen der Querträger ausgebildet sind.

Eine Grundidee liegt darin, verschiebbare Querträger für die Spurbreitenverstellung durch die spezielle Anordnung konischer Aufnahmezapfen und Aufnahmelöcher auch zum aktiven Justieren der Raupenträger einzusetzen.

Der Durchmesser des Aufnahmeloches des Raupenträgers erweitert sich zu der zum Querträger gerichteten Seite. Der Eingangsdurchmesser des Aufnahmeloches ist deutlich größer als der Außendurchmesser des Aufnahmezapfens am freien Ende des Querträgers. Diese konische Anordnung von Aufnahmezapfen und Aufnahmeloch erlaubt ein sozusagen leichtes Einfädeln des Aufnahmezapfens in das Aufnahmeloch beim Verschieben des Querträgers. Der Raupenträger muss daher anfänglich zu den Querträgern nicht exakt justiert sein. Vielmehr ergibt sich eine exakte Zentrierung erst beim Verschieben der Querträger und beim Einführen der Aufnahmezapfen in die Aufnahmelöcher. In der ausgefahrenen Endposition bilden die Aufnahmezapfen in den hierzu korrespondierend ausgebildeten Aufnahmelöchern eine formschlüssige Passung. Die eigentlichen Passungsbereiche selbst können dabei durch zylindrische Bereiche am Aufnahmezapfen und dem Aufnahmeloch gebildet sein. Hierdurch wird eine Zentrierung der Raupenträger an den Querträgern gewährleistet. Nachdem die Raupenträger exakt auf den Querträgern justiert sind, können die Raupenträger mittels geeigneter Verbindungselemente fixiert werden.

Eine bevorzugte Ausführungsform der Erfindung besteht darin, dass zum Verschieben der Querträger Hydraulikzylinder vorgesehen sind. Die Hydraulikzylinder, welche auch zur Verstellung der Spurbreite einsetzbar sind, bringen beim Einfahren der konischen Aufnahmezapfen in die Aufnahmelöcher die Kraft auf, den Raupenträger gegebenenfalls um einige Millimeter oder sogar einige Zentimeter quer zur Verfahrrichtung der Querträger zu verschieben und dadurch zu zentrieren.

Grundsätzlich können die Hydraulikzylinder direkt an den Raupenträgern angelenkt sein. Um jedoch den Montage- und Justieraufwand weiter zu vereinfachen, ist es erfindungsgemäß, dass der jeweilige Hydraulikzylinder einerseits mit dem zugehörigen Querträger und andererseits mit dem Mittelteil verbunden ist. Üblicherweise weist jeder Querträger ein oder zwei Hydraulikzylinder auf.

Vorzugsweise ist jeder Raupenträger an zwei Querträgern befestigt. In bestimmten Fällen können jedoch auch nur ein oder mehrere Querträger je Raupenträger vorgesehen sein.

Nach der Erfindung wird eine besonders gute Führung der Querträger in dem Mittelteil dadurch erreicht, dass ein Führungsholm des Querträgers, welcher in dem Mittelteil verschiebbar gelagert ist, im Querschnitt eckig, insbesondere viereckig, ausgebildet ist. Durch eine derart eckige Führung wird eine zuverlässige Axialverschiebbarkeit bei einer gleichzeitigen Verdrehsicherung erreicht.

Wichtig ist dabei vor allem die konisch verjüngende Ausgestaltung des Zapfens, um ein gewünschtes Einfädeln in die korrespondierend dazu ausgebildete Aufnahmebohrung zu erreichen. Unter Fertigungsgesichtspunkten ist es bei der Erfindung vorgesehen, dass der Aufnahmezapfen im Querschnitt rund ausgebildet ist. Der Aufnahmezapfen und das zugehörige Aufnahmeloch können somit in einfacher Weise auf einer Drehmaschine bzw. mit einer Fräse oder einem Bohrer herkömmlich gefertigt werden. Runde Querschnitte erlauben auch besonders hohe Fertigungstoleranzen.

Eine weitere Montagevereinfachung wird erfindungsgemäß dadurch erzielt, dass an den Raupenträgern, dem Mittelteil oder den Querträgern Haltelaschen mit Langlöchern vorgesehen sind, welche zu einem anfänglich verstellbaren Halten der Raupenträger ausgebildet sind. Entlang jeder Längsseite des Raupenfahrwerks sind zumindest zwei sich in Längsrichtung erstreckende Langlöcher vorzugsweise an den Raupenträgern ausgebildet. Beim Zusammenbau des Raupenfahrwerks auf der Baustelle wird dabei zunächst das Mittelteil abgestellt und mit einer entsprechenden Lagerung unterbaut. Daraufhin werden die beiden Raupenträger längs des Raupenfahrwerkes ausgerichtet und mit den Haltelaschen mit den Querträgern des Unterwagens verbunden. Die Haltelaschen besitzen dabei raupenträgerseitig ein Langloch, um die Abstandsdifferenz beim Ausfahren der Querträger auszugleichen. Danach werden über Hydraulikzylinder die Querträger ausgefahren, so dass die Aufnahmezapfen in die Aufnahmelöcher des Raupenträgers eingreifen. Zum Halten der Raupenträger sind korrespondierend zu den Haltelaschen Haltebolzen an einem festen Bauteil des restlichen Raupenfahrwerkes angebracht.

Die Haltelaschen mit den Langlöchern erlauben daher ein anfängliches grob justiertes Halten der Raupenträger, wobei beim Ausfahren der Querträger und dem Einfahren der Aufnahmezapfen in die Aufnahmelöcher die gewisse, zur Zentrierung notwendige Verschiebbarkeit der Raupenträger nicht beeinträchtigt wird.

Für ein Fixieren der zentrierten Raupenträger an den Querträgern ist es erfindungsgemäß, dass eine Schraubverbindung zum kraftschlüssigen Verbinden der Raupenträger mit den Querträgern vorgesehen ist. Nachdem der tonnenschwere Raupenträger nach dem Einfahren der Aufnahmezapfen in die Aufnahmelöcher exakt zentriert ist, können die Schraubbolzen in einfacher Weise in die fluchtenden Durchgangsbohrungen und Gewindebohrungen eingesetzt werden. Zur Sicherung-der - einzelnen Schraubbolzen können Sicherungsringe sowie Schutzdeckel angeordnet werden.

Nach der Erfindung ist es weiterhin vorteilhaft, dass zum Festlegen einer Spurbreite jeweils ein Absteckbolzen zwischen Querträger und Mittelteil vorgesehen ist. In den Querträgern sind dabei entsprechend den möglichen, üblicherweise standardisierten Spurbreiten Durchgangslöcher vorgesehen, welche durch einen Absteckbolzen durchdrungen werden können. Es kann so eine zuverlässige Fixierung der Position des jeweiligen Querträgers am Mittelteil erfolgen.

Bevorzugterweise ist der Absteckbolzen im Querträger mit einer Passung eingebaut und ist am Mittelteil durch eine Abflachung eines Bolzenkopfes und eines Bolzenfußes seitlich geführt. Dabei weist der Absteckbolzen in vertikaler Richtung eine Bewegungsmöglichkeit auf, um bei Belastung ein Spiel zwischen dem Querträger und dem Mittelteil auszugleichen.

Die Erfindung wird weiter anhand von bevorzugten Ausführungsbeispielen erläutert, welche schematisch in den beigefügten Zeichnungen dargestellt sind. In den Zeichnungen zeigen:
- Fig. 1: eine schematische Draufsicht auf ein erfindungsgemäßes Raupenfahrwerk;
- Fig. 2: eine schematische Querschnittsansicht durch das Raupenfahrwerk gemäß Fig. 1 an den Querträgern; und
- Fig. 3: eine abgewandtelte Querschnittsansicht durch ein erfindungsgemäßes Raupenfahrwerk mit abmontierten Raupenträgern.

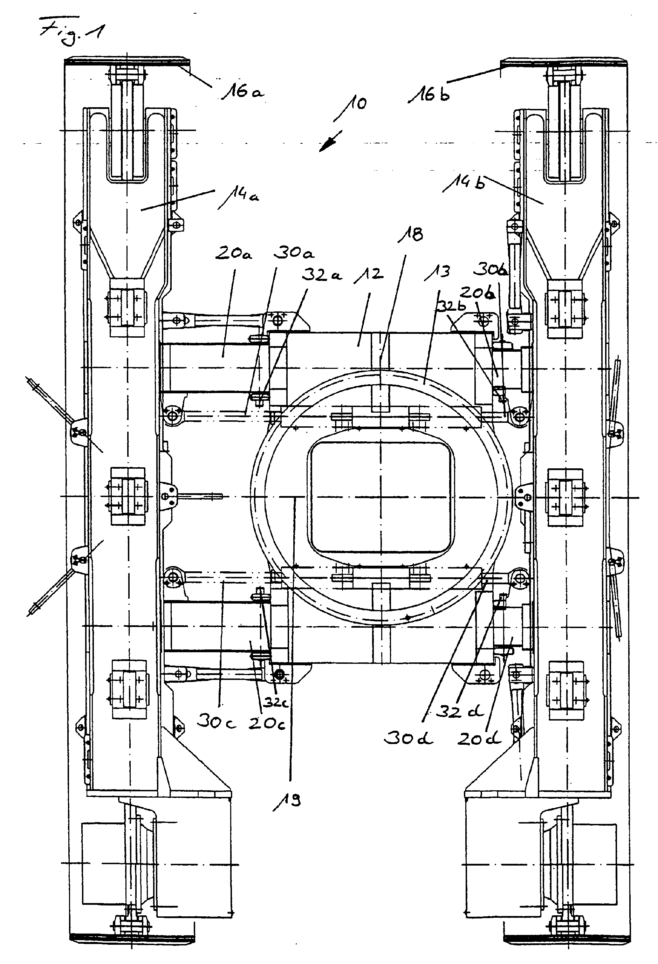

Gemäß Fig. 1 umfasst ein erfindungsgemäßes Raupenfahrwerk 10 ein kastenförmiges Mittelteil 12, an dessen Oberseite ein Drehkranz 13 zur drehbaren Aufnahme eines sogenannten Oberwagens angeordnet ist. Entlang einer Längsrichtung 18 des Raupenfahrwerkes 10 sind an den beiden Längsseiten je ein Raupenträger 14a, 14b angeordnet. Die Raupenträger 14a, 14b sind über je zwei Querträger 20a, 20c bzw. 20b, 20d gehaltert, welche wiederum in dem Mittelteil 12 in einer senkrecht zur Längsrichtung 18 stehenden Querrichtung 19 verschiebbar gelagert sind.

In Fig. 1 ist der rechtsseitige Raupenträger 14b in seiner zum Mittelteil 12 eingefahrenen Position dargestellt. Diese Position ist beispielsweise beim Transport einer Baumaschine mit dem erfindungsgemäßen Raupenfahrwerk von oder zur Baustelle zweckmäßig, wenn die Raupenträger 14a, 14b an dem Raupenfahrwerk verbleiben. Zum Verstellen und Ausfahren der Raupenträger 14a, 14b in eine ausgefahrene Position, wie sie durch den linksseitigen Raupenträger 14a von Fig. 1 verdeutlicht ist, sind Hydraulikzylinder 30a, 30b, 30c, 30d für jeden der Querträger vorgesehen. Zur Lagefixierung des jeweiligen Querträgers 20 in der gewählten Position sind je Querträger 20 ein Absteckbolzen 32 vorgesehen, welcher den jeweiligen Querträger 20 und entsprechende Halteplatten des Mittelteiles 12 durchdringt.

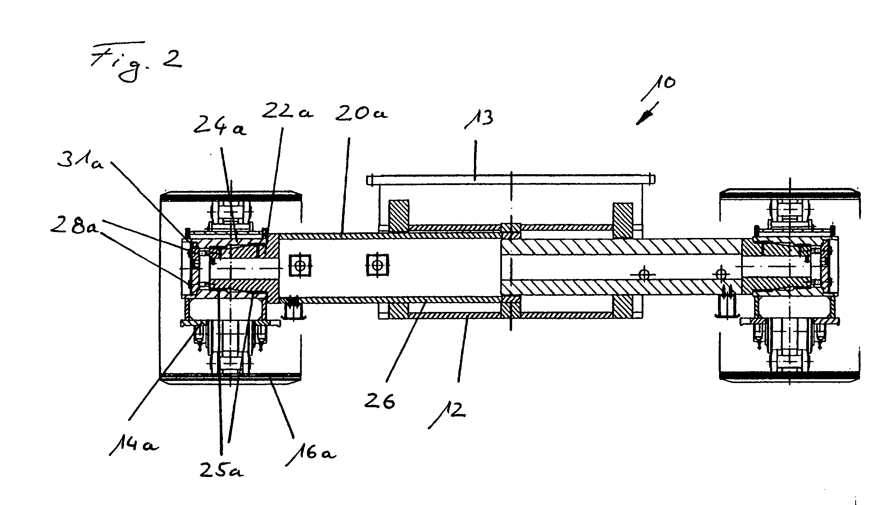

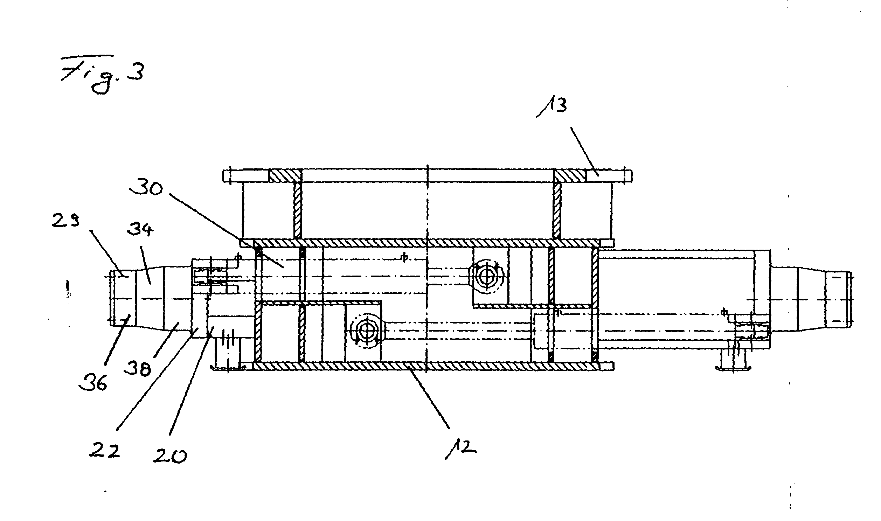

Die mit der Erfindung erreichbare Montageerleichterung beim Montieren der abnehmbaren Raupenträger 14 geht anschaulich aus den Figuren 2 und 3 hervor. Hierzu sind an dem zum Raupenträger 14 gerichteten freien Ende jedes Querträgers 20 ein Aufnahmezapfen 22 angebracht. Der Aufnahmezapfen 22 hat eine sich zum freien Ende hin verjüngende Gestalt mit einem ersten durchmesserkleineren Zentrierbereich 36 und einem zweiten durchmessergrößeren Zentrierbereich 38 sowie einem dazwischen angeordneten konischen Bereich 34.

Nachdem ein Raupenträger 14 zur Montage gegenüber dem Mittelteil 12 grob fixiert ist, wird der Querträger 20 ausgefahren, wobei der angefaste durchmesserkleinere Zentrierbereich 36 des Aufnahmezapfens 22 leicht in einen durchmessergrößeren Bereich eines gestuften Aufnahmeloches 24 am Raupenträger 14 einfädelt. Mit zunehmendem Eindringen des Aufnahmezapfens 22 in das Aufnahmeloch 24 sorgt der konische Bereich 34 am Aufnahmezapfen 22 dafür, dass der Raupenträger 14 immer stärker in die exakte zentrische Lage zu dem Querträger 20 geschoben wird.

In der Endposition, welche in Fig. 2 dargestellt ist, liegen die zylindrischen Zentrierbereiche 36 und 38 passgenau an Zentrierbuchsen 25a des Aufnahmeloches 24a an. An der Stirnseite des Aufnahmezapfens 22 sind Gewindebohrungen 29 eingebracht, in welche zur Bildung einer Schraubverbindung 28a Schraubbolzen eingedreht werden, welche den Aufnahmezapfen 22a und damit den Querträger 20a gegen einen Deckel 31a des Raupenträgers 14a spannen und somit für eine zuverlässige feste Verbindung sorgen.

Die hydraulisch verstellbaren Querträger 20, welche mit ihrem vom Aufnahmezapfen 22 abgewandten Führungsholm 26 im Mittelteil verschiebbar gelagert sind, können nach der Erfindung zu einem aktiven Zentrieren der Raupenträger 14 eingesetzt werden, was die Montage der tonnenschweren Raupenträger 14 auf einer Baustelle erheblich erleichtert.

## Patentansprüche

1. Raupenfahrwerk, insbesondere für eine Baumaschine, mit
- zwei Raupenträgern (14) mit je einer Raupenkette (16), wobei die Raupenträger (14) entlang einer Längsrichtung (18) zu beiden Längsseiten eines Mittelteiles (12) angeordnet sind, und
- Querträgern (20), an denen die Raupenträger (14) lösbar befestigt sind, und die jeweils einen Führungsholm (26) aufweisen, mit dem sie am Mittelteil (12) in einer Querrichtung (19) verschiebbar gelagert sind,
- wobei die Führungsholme (26), die im Mittelteil (12) verschiebbar gelagert sind, im Querschnitt eckig ausgebildet sind und
- wobei die Querträger (20) jeweils an ihrem zum Raupenträger (14) gerichteten Ende einen sich zumindest bereichsweise verjüngenden Aufnahmezapfen (22) zum Einfahren in Aufnahmelöcher (24) an den Raupenträgern (14) aufweisen,
**dadurch gekennzeichnet,**
- **dass** der sich verjüngende Bereich des Aufnahmezapfens (22) konisch mit einem runden Querschnitt ausgebildet ist und
- **dass** an den Raupenträgern (14) die Aufnahmelöcher (24) als Bohrungen eingebracht sind, welche korrespondierend zu den Aufnahmezapfen (22) der Querträger (20) ausgebildet sind.

2. Raupenfahrwerk nach Anspruch 1,
**dadurch gekennzeichnet,**
**dass** zum Verschieben der Querträger (20) Hydraulikzylinder (30) vorgesehen sind.

3. Raupenfahrwerk nach Anspruch 2,
**dadurch gekennzeichnet,**
**dass** der jeweilige Hydraulikzylinder (30) einerseits mit dem zugehörigen Querträger (20) und andererseits mit dem Mittelteil (12) verbunden ist.

4. Raupenfahrwerk nach einem der Ansprüche 1 bis 3,
**dadurch gekennzeichnet,**
**dass** jeder Raupenträger (14) an zwei Querträgern (20) befestigt ist.

5. Raupenfahrwerk nach einem der Ansprüche 1 bis 4,
**dadurch gekennzeichnet,**
**dass** die Führungsholme (26) der Querträger (20), welche in dem Mittelteil (12) verschiebbar gelagert sind, im Querschnitt viereckig ausgebildet sind.

6. Raupenfahrwerk nach einem der Ansprüche 1 bis 5,
**dadurch gekennzeichnet,**
**dass** der Aufnahmezapfen (22) einen ersten zylindrischen Zentrierbereich (36) und einen durchmessergrößeren zweiten zylindrischen Zentrierbereich (38) aufweist, zwischen denen ein konischer Bereich (34) angeordnet ist.

7. Raupenfahrwerk nach einem der Ansprüche 1 bis 6,
**dadurch gekennzeichnet,**
**dass** an dem Raupenträger (14), dem Mittelteil (12) oder den Querträgern (20) Haltelaschen mit Langlöchern vorgesehen sind, welche zu einem anfänglichen verstellbaren Halten der Raupenträger (14) ausgebildet sind.

8. Raupenfahrwerk nach einem der Ansprüche 1 bis 7,
**dadurch gekennzeichnet,**
**dass** eine Schraubverbindung (28) zum kraftschlüssigen Verbinden der Raupenträger (14) mit den Querträgern (20) vorgesehen ist.

9. Raupenfahrwerk nach einem der Ansprüche 1 bis 8,
**dadurch gekennzeichnet,**
**dass** zum Festlegen einer Spurbreite jeweils ein Absteckbolzen (32) zwischen Querträger (20) und Mittelteil (12) vorgesehen ist.

10. Verfahren zur Montage eines Raupenfahrwerkes nach einem der Ansprüche 1 bis 9, bei dem mindestens je ein Raupenträger (14) mit je einer Raupenkette (16) entlang einer Längsrichtung (18) zu beiden Längsseiten eines Mittelteiles (12) angeordnet und an Querträgern (20) lösbar befestigt werden, welche in einer Querrichtung (19) verschiebbar gelagert sind,
**dadurch gekennzeichnet,**
**dass** die Raupenträger (14) zunächst in Längsrichtung (19) verschiebbar gegenüber dem Mittelteil (12) gehalten und grob justiert werden und
**dass** durch Ausfahren der Querträger (20) mit konischen Aufnahmezapfen (22) in Aufnahmelöcher (24) der Raupenträger (14) diese zu den Querträgern (20) zumindest in Längsrichtung feinjustiert und die Aufnahmezapfen (22) in den Aufnahmelöchern (24) zentriert werden.

## Claims

1. Crawler running gear, particularly for a construction machine, with
- two crawler supports (14) with in each case a crawler chain (16), the crawler supports (14) being located along a longitudinal direction (18) on both longitudinal sides of a mid-section (12) and
- crossbeams (20), to which the crawler supports (14) are detachably fixed and which have in each case a guide spar (26), by means of which the crossbeams (20) are displaceably mounted in a transverse direction (19) on the mid-section (12),
- wherein the guide spars (26), which are displaceably mounted in the mid-section (12), have an angular cross-section and
- wherein the crossbeams (20) in each case have on their end directed towards the crawler support (14) an at least zonally tapering mounting journal (22) for insertion in mounting holes (24) on the crawler supports (14),
**characterized in that**
- the tapering area of the mounting journal (22) is constructed conically with a round cross-section and that
- on the crawler supports (14) the mounting holes (24) are made in the form of bores, which are constructed so as to correspond to the mounting journals (22) of the crossbeams (20).

2. Crawler running gear according to claim 1,
**characterized in that**
hydraulic cylinders (30) are provided for the displacement of the crossbeams (20).

3. Crawler running gear according to claim 2,
**characterized in that**
the hydraulic cylinders (30) are each connected on the one hand to the associated crossbeam (20) and on the other to the mid-section (12).

4. Crawler running gear according to one of the claims 1 to 3,
**characterized in that**
each crawler support (14) is fixed to two crossbeams (20).

5. Crawler running gear according to one of the claims 1 to 4,
**characterized in that**
the guide spars (26) of the crossbeams (20), which are displaceably mounted in the mid-section (12), have a quadrangular cross-section.

6. Crawler running gear according to one of the claims 1 to 5,
**characterized in that**
the mounting journal (22) has a first cylindrical centring area (36) and a larger diameter, second cylindrical centring area (38), between which is provided a conical area (34).

7. Crawler running gear according to one of the claims 1 to 6,
**characterized in that**
on the crawler support (14), mid-section (12) or crossbeams (20) are provided holding shackles with slotted holes, which are constructed for an initial adjustable holding of the crawler support (14).

8. Crawler running gear according to one of the claims 1 to 7,
**characterized in that**
there is a screw connection (28) for a frictional connection of the crawler supports (14) to the crossbeams (20).

9. Crawler running gear according to one of the claims 1 to 8,
**characterized in that**
for fixing a track width in each case a plug-in pin (32) is provided between the crossbeam (20) and mid-section (12).

10. Method for the installation of a crawler running gear according to one of the claims 1 to 9, in which at least one crawler support (14) with a crawler chain (16) is each positioned along a longitudinal direction (18) on both longitudinal sides of a mid-section (12) and detachably fixed to crossbeams (20), which are displaceably mounted in a transverse direction (19),
**characterized in that**
initially, the crawler supports (14) are held in displaceable manner, in the longitudinal direction (19), with respect to the mid-section (12) and are roughly adjusted and by extending the crossbeams (20) with conical mounting journals (22) in mounting holes (24) of the crawler supports (14) they are precisely adjusted, at least in the longitudinal direction, with respect to the crossbeams (20) and the mounting journals (22) are centred in the mounting holes (24).

## Revendications

1. Châssis sur chenilles, en particulier pour une machine de chantier, avec
- deux supports (14) de chenilles avec chacun une chenille (16), les supports (14) de chenille étant placés dans une direction longitudinale (18) sur les deux côtés longitudinaux d'une partie centrale (12), et
- des supports transversaux (20) sur lesquels les supports (14) de chenille sont fixés de manière amovible, et qui présentent chacun une barre de guidage (26) avec laquelle ils sont montés mobiles dans une direction transversale (19) sur la partie centrale (12),
- les barres de guidage (26), qui sont montées mobiles dans la partie centrale (12), présentant une section anguleuse, et
- les supports transversaux (20) présentant chacun, à leur extrémité dirigée vers le support (14) de chenille, un tenon de réception (22) s'effilant au moins par zones et destiné à rentrer dans des orifices de réception (24) sur les supports (14) de chenille,
***caractérisé***
- ***en ce que*** la zone effilée du tenon de réception (22) est réalisée conique avec une section ronde, et
- ***en ce que,*** sur les supports (14) de chenille, les orifices de réception (24) sont réalisés sous la forme de perçages qui sont conformés d'une manière correspondant aux tenons de réception (22) des supports transversaux (20).

2. Châssis sur chenilles selon la revendication 1, ***caractérisé en ce que*** des vérins hydrauliques (30) sont prévus pour déplacer les supports transversaux (20).

3. Châssis sur chenilles selon la revendication 2, ***caractérisé en ce que*** le vérin hydraulique (30) respectif est relié d'une part au support transversal (20) associé et d'autre part à la partie centrale (12).

4. Châssis sur chenilles selon l'une quelconque des revendications 1 à 3, ***caractérisé en ce que*** chaque support (14) de chenille est fixé sur deux supports transversaux (20).

5. Châssis sur chenilles selon l'une quelconque des revendications 1 à 4, ***caractérisé en ce que*** les barres de guidage (26) des supports transversaux (20), qui sont montés mobiles dans la partie centrale (12), présentent une section quadrangulaire.

6. Châssis sur chenilles selon l'une quelconque des revendications 1 à 5, ***caractérisé en ce que*** le tenon de réception (22) présente une première zone de centrage cylindrique (36) et une deuxième zone de centrage cylindrique (38) de plus grand diamètre, entre lesquelles est placée une zone conique (34).

7. Châssis sur chenilles selon l'une quelconque des revendications 1 à 6, ***caractérisé en ce que*** sur le support (14) de chenille, la partie centrale (12) ou les supports transversaux (20) sont prévues des pattes de maintien avec des orifices oblongs, qui sont conformées en vue d'une fixation initiale mobile des supports (14) de chenille.

8. Châssis sur chenilles selon l'une quelconque des revendications 1 à 7, ***caractérisé en ce qu'***un assemblage vissé (28) est prévu pour assembler par force les supports (14) de chenille aux supports transversaux (20).

9. Châssis sur chenilles selon l'une quelconque des revendications 1 à 8, ***caractérisé en ce que**,* pour définir une largeur de voie, il est prévu à chaque fois un axe débrochable (32) entre le support transversal (20) et la partie centrale (12).

10. Procédé de montage d'un châssis sur chenilles selon l'une quelconque des revendications 1 à 9, dans lequel au moins un support (14) de chenilles avec une chenille (16) est monté dans une direction longitudinal (18) sur chacun des deux côtés longitudinaux d'une partie centrale (12) et fixé de manière amovible à des supports transversaux (20) qui sont montés mobiles dans une direction transversale (19),
***caractérisé***
***en ce que*** les supports (14) de chenille sont d'abord fixés de manière mobile dans la direction longitudinale (19) par rapport à la partie centrale (12) et réglés grossièrement, et
***en ce qu**'en* faisant sortir les supports transversaux (20) avec des tenons de réception coniques (22) dans des orifices de réception (24) des supports (14) de chenille, ceux-ci sont réglés finement au moins dans la direction longitudinale par rapport aux supports transversaux (20) et les tenons de réception (22) sont centrés dans les orifices de réception (24).
